Europäisches Patentamt

European Patent Office

Office européen des brevets

(19)

(11) **EP 1 139 599 A2**

(12) **EUROPÄISCHE PATENTANMELDUNG**

(43) Veröffentlichungstag:
**04.10.2001 Patentblatt 2001/40**

(51) Int Cl.⁷: **H04L 1/20**

(21) Anmeldenummer: **01107467.1**

(22) Anmeldetag: **28.03.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **01.04.2000 DE 10016469**

(71) Anmelder: **Acterna München GmbH
85737 Ismaning (DE)**

(72) Erfinder: **Klenner, Günther
83022 Rosenheim (DE)**

(74) Vertreter: **Neumeister, Kurt Gustav
Agnesstrasse 64
80797 München (DE)**

(54) **Verfahren und Vorrichtung zur Bitfehlerratenmessung in digitalen Kommunikations-systemen**

(57)　Bei einem Verfahren zum Messen der Empfänger-Empfindlichkeit von zum Betrieb an einem digitalen Funknetz vorgesehenen Funkeinrichtungen, wobei das Erfülltsein eines ersten Kriteriums bei einer vorgegebenen Datenübertragungsrate und einem vorgegebenen Empfangspegel überprüft wird, ergibt sich eine wesentliche Erhöhung der Prüfgeschwindigkeit dadurch, daß die Überprüfung bei einer höheren als der vorgegebenen Datenübertragungsrate bei dem vorgegebenen Empfangspegel durchgeführt wird, wobei das Erfülltsein eines zweiten Kriteriums überprüft wird, und wobei das zweite Kriterium aus dem ersten bestimmt wird. Ferner ergibt sich bei einem Verfahren zum Messen der Bitfehlerrate und zum Betrieb an einem digitalen Funknetz vorgesehenen Funkeinrichtungen, wobei bei einer vorgegebenen Datenübertragungsrate und einem vorgegebenen Empfangspegel eine erste Bitfehlerrate zu ermitteln ist, eine wesentliche Erhöhung der Geschwindigkeit des Meßvorgangs dadurch, daß die Messung bei einer höheren als der vorgegebenen Datenrate bei dem vorgegebenen Empfangspegel durchgeführt wird, wobei bei der höheren Datenübertragungsrate eine zweite Bitfehlerrate ermittelt wird und wobei die erste Bitfehlerrate aus der zweiten Bitfehlerrate bestimmt wird. Schließlich bezieht sich die vorliegende Erfindung auf eine Testeinrichtung zur Durchführung der Verfahren.

Fig. 1

**Beschreibung**

Die vorliegende Erfindung betrifft ein Verfahren zum Messen oder Prüfen der Empfängerempfindlichkeit von zum Betrieb an einem digitalen Funknetz vorgesehenen Funkeinrichtungen gemäß dem Oberbegriff des Patentanspruchs 1. Ferner betrifft die vorliegende Erfindung ein Verfahren zum Messen der Bitfehlerrate von zum Betrieb an einem digitalen Funknetz vorgesehene Funkeinrichtungen gemäß dem Oberbegriff des Patentanspruchs 4. Schließlich betrifft die vorliegende Erfindung eine Testeinrichtung für zum Betrieb an einem digitalen Funknetz vorgesehene Funkeinrichtungen gemäß Patentanspruch 8 und 10, insbesondere zur Durchführung der Verfahren.

Im Stand der Technik sind Testeinrichtungen für Mobiltelefone oder Basisstationen bekannt. Zum druckschriftlichen Nachweis hierfür wird auf die Veröffentlichung "Meßtechnik für GSM-Funktelefone" von R. Schoblick, in Funkschau 16/97, Seiten 64-66 verwiesen. Derartige Meßplätze geben Aufschluß über die Funktion der einzelnen Komponenten eines Mobiltelefons und insbesondere über die Einhaltung der standardisierten Grenzwerte. Anwendungsmöglichkeiten sind z. B. in einem Fachgeschäft oder bei der Endkontrolle des Herstellers.

Zur Messung der Übertragungsqualität wird vorteilhafterweise eine Bitfehlerratenmessung durchgeführt. Dabei werden vom Tester gesendete Daten unter Verwendung der Loop-Back-Funktion wieder an diesen zurückgesendet. Die Bitfehlerratenmessung kann hervorragend zur Ermittlung der Empfindlichkeit des Empfängers eines Mobiltelefons genutzt werden. Bei der Messung der Empfängerempfindlichkeit bei einem Fachhändler reduziert der Tester definierte Empfangspegel des Mobiltelefons - beginnend ab einem sinnvollem Startwert von ungefähr -95 dBm, und zwar stufenweise solange bis die Bitfehlerrate unzulässig hoch wird. Der Empfangspegel (in dBm), bei dem gerade noch akzeptable Werte erzielt werden, ist die Empfindlichkeit der Mobilstation. Bei einer Messung der Empfängerempfindlichkeit bei der Endkontrolle eines Herstellers wird die Einhaltung der Spezifikation überprüft. Dabei wird diejenige minimale empfangene Leistung gemessen, und zwar an der Antennenverbindungseinrichtung des Mobiltelefons, bei welcher eine Bit- oder Blockfehlerrate einen vorgegebenen Wert nicht überschreitet. Ein entsprechender dynamischer Bereich ist der Eingangsleistungsbereich der Antennenverbindungseinrichtung der Mobilstation, über den die Bit- oder Blockfehlerrate einen vorgegebenen Wert nicht überschreitet. Bei der Messung werden die Anzahl der übertragenen Bits oder Bitblöcke vom Tester und die Anzahl der von der Mobilstation empfangenen guten Bits bzw. Blöcke gezählt. Das Ziel des Funktionstests der Messung der Empfängerempfindlichkeit besteht darin sicherzustellen, daß das Mobiltelefon eine ausreichende Empfangsreichweite besitzt.

Insbesondere bei digitalen Kommunikationssytemen, wie z. B. nach dem CDMA oder cdmaOne Standard, wird die Prüfung durch Fehlerschutzmechanismen, wie z. B. Faltungscodierung (convolutional coding) und Vorwärts-Fehlerkorrektur (forward error correction, FEC) erschwert. Dies beruht darauf, daß durch derartige Schutzmechanismen Fehler nur noch sehr selten auftreten und immer ganze Datenblöcke (frames) betreffen. Deshalb wird in diesem Fall als Fehlerrate auch immer eine Blockfehlerrate (frame error rate, FER) verwendet. Zur genauen Überprüfung, ob ein Mobiltelefon eine gemäß den Spezifikationen erforderliche Empfängerempfindlichkeit besitzt, sind lange Meßzeiten erforderlich. Ein typischer Wert für einen Grenzwert für die Blockfehlerrate stellt 0,005 dar, welcher mit einer Sicherheit von 95% eingehalten werden muß. Der Schwellwert von 0,005 entspricht einem auftretendem Fehler pro 200 Blöcke. Unter Annahme einer $\chi^2$-Verteilung (Chi-Quadrat-Verteilung) müssen mindestens 600 Blöcke mit maximal einem Fehler übertragen werden, um die geforderte Sicherheit von 95% zu erreichen. Bei einer Übertragungsdauer von etwa 20 Millisekunden pro Block entspricht dies einer Mindestprüfzeit von 12 Sekunden. Allerdings kann sich die Prüfzeit auf etwa 30 bis 50 Sekunden verlängern, falls bei der Messung mehrere Blockfehler auftreten. Insbesondere deshalb dauert ein Funktionstest bei einer mobilen Funkeinrichtung des CDMA, cdmaOne oder ähnlichen Mobilfunkstandards um ein Vielfaches länger als derjenige bei einem Test eines GSM Handys. Insbesondere Hersteller derartiger Handys müssen daher immer eine Abwägung zwischen der Qualität der verwendeten Komponenten und der sich ergebenden Testzeit vornehmen. Anschaulich gesprochen bedeutetet dies, daß eine kostengünstiges Handy teurer bei dem sich an die Produktion anschließenden Funktionstest kommt. Umgekehrt ist ein aufwendig hergestelltes und damit teures Handy billiger zu testen.

Die Aufgabe der vorliegenden Erfindung besteht daher darin, die Nachteile des Standes der Technik zu vermeiden, und insbesondere eine Prüfüng der Empfängerempfindlichkeit und eine Messung der Bitfehlerrate schneller als bisher durchzuführen.

Die erfindungsgemäße Aufgabe wird bei einem Verfahren der eingangs genannten Art durch die im kennzeichnenden Teil der Patentansprüche 1 bzw. 5 angegebenen Merkmale gelöst.

Durch das Durchführen der Messung der Bit-bzw. Blockfehlerrate bzw. der Prüfung der Empfänger-Empfindlichkeit bei einer höheren Datenübertragungsrate, welche insbesondere nicht der zum Betrieb vorgesehenen Datenübertragungsrate entspricht, wird die Meßzeit signifikant verkürzt.

Vorzugsweise sind die Funkeinrichtungen Mobiltelefone, insbesondere nach dem CDMA- oder dem cdmaOne-Standard. Bei Verwendung eines code division multiple access-Verfahrens oder eines vergleichbaren Verfahrens dauert die Messung der Empfängerempfindlichkeit, wie oben erwähnt wurde, besonders lange.

Vorteilhafterweise wird überprüft, ob die erst Bit- bzw. Blockfehlerrate mit einer vorgegebenen Sicherheit kleiner als ein vorgegebener Schwellenwert ist. Dazu wird vorzugsweise die bei der höheren Datenübertragungsrate erhaltene zweite Bit- bzw. Blockfehlerrate mit einem zweiten vorgegebenen Schwellenwert verglichen. Der zweite vorgegebene Schwellenwert, welcher insbesondere ein Funktion der Datenübertragungsrate und der sich daraus ergebenden Schutzmechanismen ist, wird vorzugsweise aus dem ersten Schwellenwert und der Datenübertragungsrate bestimmt. Dies kann insbesondere durch Verwendung einer Wertetabelle oder Look-Up-Tabelle erreicht werden. Bevorzugt wird entsprechend der vorgegebenen Sicherheit eine Anzahl von Bits oder Blöcken nach Auftreten eines Fehlers durchsucht, wobei die Messung beendet wird, wenn die Blockfehlerrate mit der vorgegebenen Sicherheit kleiner als der vorgegebenen Schwellenwert ist, oder wenn die geforderte Sicherheit in einer vorgegebenen maximalen Meßzeit nicht mehr erreicht werden kann.

Weitere bevorzugte Ausführungsformen der Erfindung sind in den abhängigen Patentansprüchen offenbart.

Die Erfindung, sowie weitere Merkmale, Vorteile, Zeile, und Anwendungsmöglichkeiten derselben wird bzw. werden nachfolgend unter Bezugnahme auf die beigefügten Zeichnungen näher erläutert. Dabei bilden alle schriftlich erwähnten oder bildlich dargestellten Merkmale für sich oder in beliebiger sinnvoller Kombination den Gegenstand der vorliegenden Erfindung, und zwar unabhängig von ihrer Zusammenfassung in den Patentansprüchen oder deren Rückbeziehung. In den Zeichnungen zeigen:

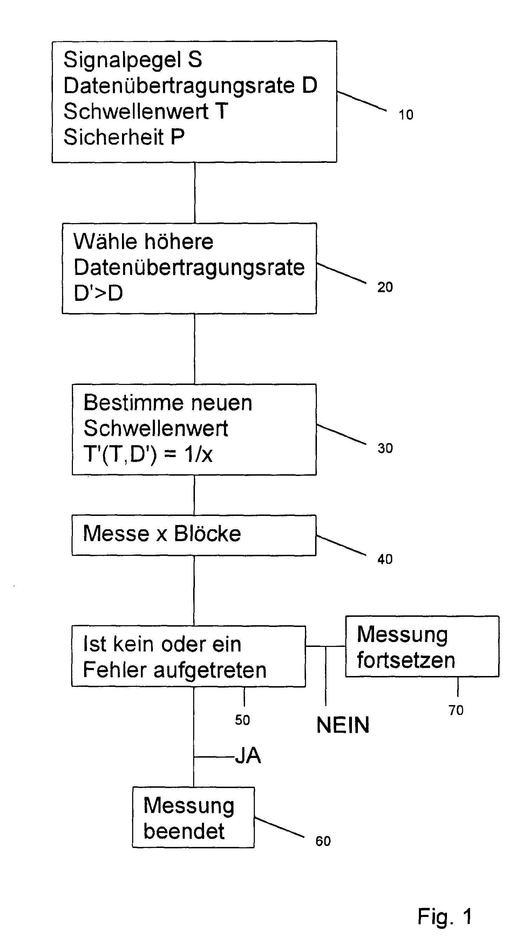

Fig. 1 ein Diagramm zur Veranschaulichung des erfindungsgemäßen Verfahrens.

In einer bevorzugten Ausführungsform der vorliegenden Erfindung wird die Messung einer Bitfehlerrate und insbesondere einer Blockfehlerrate dazu verwendet, die Empfängerempfindlichkeit einer Funkeinrichtung, insbesondere eines Mobiltelefons, zu bestimmen. Dazu wird der Empfangspegel des Mobiltelefons von einem Ausgangswert durch Steuersignale stufenweise solange reduziert, bis die Bitfehlerrate unzulässig hoch wird. Der Empfangspegel, bei dem gerade noch akzeptable Meßwerte erzielt werden, stellt die Empfindlichkeit des Mobiltelefons dar. Wie oben bereits erwähnt wurde, wird aufgrund von Schutzmechanismen jeweils eine Blockfehlerrate bestimmt. Im einzelnen wird daher bei den verschiedenen Empfangssignalen bestimmt, ob die Blockfehlerrate eine vorgegebene Spezifikation einhält. Das bevorzugte Ausführungsbeispiel betrifft einen Test einer Mobilstation nach dem cdmaOne-Standard.

Bei der Empfindlichkeitsprüfung wird die Blockfehlerrate vornehmlich durch zwei Kriterien bestimmt. Dies ist zum einen die Signalstärke und zum anderen der verwendete Schutzmechanismus. Beispielsweise wird ein Signalpegel von -104dBm und eine Datenübertragung von 9600 bps verwendet. Bei diesen Werten soll die Empfängerempfindlichkeit der Handys bei der Endkontrolle eines Herstellers überprüft werden. Die Datenübertragung von 9600 bps gibt den verwendeten Schutzmechanismus, wie z. B. Faltungscodierung oder Vorwärts-Fehler-Korrektur, vor.

Beispielsweise gibt daher eine einzuhaltende Spezifikation vor, daß die Blockfehlerrate kleiner als 0,005 bei einem Signalpegel von -104 dBm und einer Datenübertragungsrate 9600 bps sein muß. Wie in der Beschreibungseinleitung erläutert wurde, entspricht dies einer Mindestprüfzeit von 12 Sekunden, wobei diese Prüfzeit je nach dem Verlauf der Messung sich auf ein Vielfaches davon verlängern kann. Erfindungsgemäß wird nun die Datenübertragungsrate erhöht, und zwar beispielsweise auf einen Wert von 14400 bps. Da die Datenübertragungsrate den Schutzmechanismus vorgibt, entspricht dem Schwellwert von 0,005 (Datenübertragungrate: 9600 bps) nunmehr ein Schwellwert von 0,03 (Datenübertragungsrate: 14400 bps). Die Berechnung des Schwellwerts erfolgt unter Annahme einer Poisson-Verteilung der Fehler, was der Annahme entspricht, daß alle Fehler unabhängig voneinander auftreten. Es ergibt sich für die gemessene Blockfehlerrate eine Obergrenze von

$$FER_{gem} = 2 * FER_{spez} * k/\chi^2(1-C,2k).$$

Dabei bezeichnen $FER_{gem}$ die gemessene Fehlerrate, $FER_{spez}$ eine spezifizierte oder vorgegebene Fehlerrate, C die vorgegebene Sicherheit, daß die wahre Fehlerrate kleiner als die spezifizierte oder vorgegebene Fehlerrate $FER_{spez}$ ist, und k die Anzahl der aufgetretenen Fehler. Der neue Schwellwert ist größer als der alte, da bei einer erhöhten Übertragungsrate weniger Schutz besteht. Der höhere Schwellwert von 0,03 entspricht dann etwa einem auftretendem Fehler pro 34 Blöcke. Unter Annahme einer Chi-Quadrat-Verteilung kann diese Blockfehlerrate mit einer 95 prozentigen Sicherheit dann garantiert werden, wenn in 100 Blöcken ein oder kein Fehler auftritt. Diese Anzahl ist aber wesentlich schneller, nämlich in 2 Sekunden übertragen, da für einen Block ein Übertragungszeit von 20 Millisekunden gilt. Somit ist das erfindungsgemäße Verfahren zur Empfänger-Empfindlichkeitsprüfung etwa sechsmal schneller als das herkömmliche Verfahren, welches zur Prüfung der Empfänger-Empfindlichkeit die im Betrieb des Funknetzes verwendetet Datenübertragungsrate benutzt. Insbesondere sei bemerkt, daß durch etwas weniger als eine Verdopplung der Datenübertragungsrate aufgrund der nicht linearen Zusammenhänge, welche sich aus den Fehlerschutzmechanismen und der damit in Verbindung stehenden "Granularität" ergeben, eine Versechsfachung erreicht werden kann.

Gegenüber dem herkömmlichen Verfahren wird gemäß der vorliegenden Erfindung nur die Übertragungsgeschwindigkeit, d. h. die Rate der Datenübertragung, und damit der Schutzmechanismus geändert. Alle anderen Parameter (Prüfaufbau, Signalstärke...) werden nicht geändert, so daß auch das Signal/Rausch-Verhältnis im Mobiltelefon unverändert ist. Dies bedeutet aber, daß die aus diesem Signal/Rauschverhältnis resultierenden Übertragungsfehler ebenfalls gleich häufig sind und diese Fehler durch die unterschiedlichen Schutzmechanismen mehr oder weniger kompensiert werden. Dadurch ist sichergestellt, daß die Testkriterien gemäß der vorliegenden Erfindung und gemäß dem Stand der Technik äquivalent sind, d. h. daß ein Mobiltelefon, welches die Prüfung bei einer überhöhten Übertragungsrate mit angepaßter Fehlerrate passiert, auch den ursprünglichen Test bei niedrigerer Übertragungsrate besteht und umgekehrt.

Erfindungsgemäß werden daher Meßergebnisse, welche bei der höheren Übertragungsgeschwindigkeit gewonnen wurden, in die äquivalenten Werte bei niedriger Geschwindigkeit übertragen. Vorzugsweise werden die Meßergebnisses dem Benutzer auf einer Anzeigeeinrichtung dargestellt. Die Empfänger-Empfindlichkeitprüfung ist beendet, wenn das Ergebnis mit der geforderten Sicherheit erreicht ist, oder wenn so viele Fehler aufgetreten sind, daß es mit Sicherheit nicht mehr erreicht werden kann.

In Fig. 1 ist in etwas abstrakterer Form das erfindungsgemäße Verfahren zur Bestimmung einer Blockfehlerrate dargestellt. In einem Schritt 10 werden gemäß einem vorbestimmten Mobilfunkstandard die Meßkriterien festgelegt. Die entsprechenden Werte sind dabei vorzugsweise einstellbar. Genauer ist ein Signalpegel S, eine Datenübertragungsrate D, ein Schwellenwert T und eine Sicherheit P vorgegeben. Dies bedeutet, daß die vorgegebene Spezifikation dann erfüllt ist, falls bei einem Signalpegel S und einer Datenübertragungsrate D die Bit- oder Blockfehlerrate mit der Sicherheit P unter dem vorgegebenen Schwellenwert T ist. Das System wählt nun eine höhere Datenübertragungsrate D' größer D aus. Die höhere Datenübertragungsrate D' wird insbesondere von der für die Messung gewünschten Gesamtmeßzeit, sowie von den Systemkapazitäten abhängen. Die höhere Datenübertragungsrate wird im Schritt 20 eingestellt. Im Schritt 30 wird ein sich daraus ergebender neuer Schwellenwert T' größer T bestimmt. Der neue Schwellenwert T' hängt dabei von dem alten Schwellenwert und der im Schritt 20 erhöhten Datenübertragungsrate auf D' ab. Es sei bemerkt, daß sich der Schwellenwert T' als $1/x$ schreiben läßt, wobei x die Anzahl der Blöcke darstellt, in denen ein oder kein Fehler auftreten darf. Im Schritt 40 werden nun x frames abgewartet und die fehlerhaften Blöcke gezählt. Im Schritt 50 wird festgestellt, ob während der Messung des Schritts 40 null oder ein Fehler aufgetreten sind. Falls das Ergebnis dieser Abfrage JA ist, so wird im Schritt 60 die Messung beendet und der Test ist bestanden (pass). Falls das Ergebnis des Schritts 50 NEIN ist, so werden im Schritt 70 weitere Blöcke im Hinblick auf das Auftreten von Fehlern getestet, und zwar bis zu dem Zeitpunkt, wenn das Ergebnis mit der geforderten Sicherheit erreicht ist, oder wenn so viele Fehler aufgetreten sind, daß es mit Sicherheit in einer vorgebbaren maximalen Meßzeit nicht mehr erreicht werden kann. Als Alternative zu dem dargestellten Verfahren kann auch grundsätzlich für eine vorgegebene Meßzeit gemessen werden, wobei die sich ergebende Ist-Fehlerrate mit der von der Sicherheit abhängigen Soll-Fehlerrate verglichen wird.

Die Erfindung wurde zuvor anhand von bevorzugten Ausführungsbeispielen derselben näher erläutert. Für einen Fachmann ist es jedoch offensichtlich, daß unterschiedliche Abwandlungen und Modifikationen gemacht werden können, ohne den der Erfindung zugrundliegenden Gedanken zu verlassen.

**Patentansprüche**

1. Verfahren zum Messen der Empfängerempfindlichkeit von zum Betrieb an einem digitalen Funknetz vorgesehenen Funkeinrichtungen, wobei das Erfülltsein eines ersten Kriteriums bei einer vorgegebenen Datenübertragungsrate und einem vorgegebenen Empfangspegel überprüft wird, **dadurch gekennzeichnet, daß** die Überprüfung bei einer höheren als der vorgegebenen Datenübertragungsrate bei dem vorgegebenen Empfangspegel durchgeführt wird, wobei das Erfülltsein eines zweiten Kriteriums überprüft wird, und wobei das zweite Kriterium aus dem ersten bestimmt wird.

2. Verfahren nach Anspruch 1, **dadurch gekennzeichnet, daß** das Kriterium darin besteht, **daß** eine Bit- oder Blockfehlerrate mit einer vorgegebenen Sicherheit kleiner als ein vorgegebener Schwellenwert ist, wobei vorzugsweise der zweite vorgegebene Schwellenwert eine Funktion des ersten vorgegebenen Schwellenwerts und der höheren Datenübertragungsrate ist.

3. Verfahren nach Anspruch 1 oder 2, **dadurch gekennzeichnet, daß** entsprechend der vorgegebenen Sicherheit eine Anzahl von Blöcken nach Auftreten eines Fehlers durchsucht wird, wobei die Messung beendet ist, wenn die Blockfehlerrate mit der vorgegebenen Sicherheit kleiner als der vorgegebenen Schwellenwert ist, oder die wenn die geforderte Sicherheit in einer vorgegebenen maximalen Meßzeit nicht mehr erreicht werden kann.

4. Verfahren zum Messen der Bitfehlerraten von zum Betrieb an einem digitalen Funknetz vorgesehenen Funkeinrichtungen, wobei bei einer vorgegebenen Datenübertragungsrate und einem vorgegebenen Empfangspegel eine erste Bitfehlerrate zu ermitteln ist, **dadurch gekennzeichnet, daß** die Messung bei einer höheren als der vorgegebenen Datenübertragungsrate bei dem vorgegebenen Empfangspegel durchgeführt wird, wobei bei der höheren Datenübertragungsrate eine zweite Bitfehlerrate ermittelt wird, und wobei die erste Bitfehlerrate aus der zweiten Bitfehlerrate bestimmt wird.

5. Verfahren nach Anspruch 4, **dadurch gekennzeichnet, daß** die Funkeinrichtungen Mobiltelefone, insbesondere nach dem CDMA Standard, sind, wobei vorzugsweise die Bitfehlerrate eine Blockfehlerrate ist, wobei vorzugsweise ferner überprüft wird, ob die erste Bitfehlerrate mit einer vorgegebenen Sicherheit kleiner als ein vorgegebener Schwellenwert ist, und wobei vorzugsweise zur Überprüfung, ob die erste Bitfehlerrate mit einer vorgegebenen Sicherheit kleiner als ein vorgegebener Schwellenwert ist, die zweite Bitfehlerrate mit einem vorgegebenen Schwellenwert verglichen wird.

6. Verfahren nach Anspruch 5, **dadurch gekennzeichnet, daß** der Schwellenwert eine Funktion der Datenübertragunng ist, wobei vorzugsweise der zweite Schwellenwert aus dem ersten Schwellenwert bestimmt wird.

7. Verfahren nach einem der Ansprüche 4 bis 6, **dadurch gekennzeichnet, daß** entsprechend der vorgegebenen Sicherheit eine Anzahl von Blöcken nach Auftreten eines Fehlers durchsucht wird, wobei die Messung beendet ist, wenn die Blockfehlerrate mit der vorgegebenen Sicherheit kleiner als der vorgegebene Schwellenwert ist, oder wenn die geforderte Sicherheit in einer vorgegebenen maximalen Meßzeit nicht mehr erreicht werden kann.

8. Testeinrichtung für zum Betrieb an einem digitalen Funknetz vorgesehene Funkeinrichtungen, insbesondere zur Durchführung des Verfahrens nach einem der vorhergehenden Ansprüche, zum Messen der Empfängerempfindlichkeit der Funkeinrichtungen, wobei das Erfülltsein eines ersten Kriteriums bei einer vorgegebenen Datenübertragungsrate und einem vorgegebenen Empfangspegel überprüft wird, **dadurch gekennzeichnet, daß** die Testeinrichtung eine Betriebsmodus aufweist, in welchem die Überprüfüng bei einer höheren als der vorgegebenen Datenübertragungsrate bei dem vorgegebenen Empfangspegel durchgeführt wird, wobei das Erfülltsein eines zweiten Kriteriums überprüft wird, und wobei das zweite Kriterium aus dem ersten bestimmt wird.

9. Testeinrichtung nach Anspruch 8, **dadurch gekennzeichnet, daß** die Testeinrichtung eine Steuereinrichtung zur Steuerung des Testablaufs aufweist, wobei vorzugsweise die Testeinrichtung ferner eine Anzeigeeinrichtung zur Anzeige eines Meß- oder Testergebnisses aufweist.

10. Testeinrichtung für zum Betrieb an einem digitalen Funknetz vorgesehene Funkeinrichtungen, insbesondere zur Durchführung des Verfahrens nach einem der vorhergehenden Ansprüche 1 bis 7, zum Messen der Empfängerempfindlichkeit der Funkeinrichtungen, wobei bei einer vorgegebenen Datenübertragungsrate und einem vorgegebenen Empfangspegel eine erste Bitfehlerrate zu ermitteln ist, **dadurch gekennzeichnet, daß** die Messung bei einer höheren als der vorgegebenen Datenübertragungsrate bei dem vorgegebenen Empfangspegel durchgeführt wird, wobei bei der höheren Datenübertragungsrate eine zweite Bitfehlerrate ermittelt wird, und wobei die erste Bitfehlerrate aus der zweiten Bitfehlerrate bestimmt wird.

Signalpegel S
Datenübertragungsrate D
Schwellenwert T
Sicherheit P  — 10

Wähle höhere
Datenübertragungsrate
D'>D  — 20

Bestimme neuen
Schwellenwert
$T'(T,D') = 1/x$  — 30

Messe x Blöcke  — 40

Ist kein oder ein
Fehler aufgetreten  — 50

Messung
fortsetzen  — 70

NEIN

——JA

Messung
beendet  — 60

Fig. 1